# EUROPEAN PATENT SPECIFICATION

(11) **EP 2 724 016 B1**
(45) Date of publication and mention of the grant of the patent: **21.10.2015**
(21) Application number: 12737316.5
(22) Date of filing: 12.06.2012
(51) Int. Cl.: F02M 63/02, F02M 69/14, F02M 63/00, F02M 61/04, F02M 69/04

(54) **FUEL INJECTION SYSTEM FOR AN INTERNAL COMBUSTION ENGINE AND METHOD OF OPERATING A FUEL INJECTION SYSTEM IN AN INTERNAL COMBUSTION ENGINE**
KRAFTSTOFFEINSPRITZSYSTEM FÜR EINE BRENNKRAFTMASCHINE UND VERFAHREN ZUM BETREIBEN EINES KRAFTSTOFFEINSPRITZSYSTEMS IN EINER BRENNKRAFTMASCHINE
SYSTÈME D'INJECTION DE CARBURANT POUR MOTEUR À COMBUSTION INTERNE ET PROCÉDÉ DE FONCTIONNEMENT D'UN SYSTÈME D'INJECTION DE CARBURANT DANS UN MOTEUR À COMBUSTION INTERNE

(30) Priority: 23.06.2011 FI 20115652
(43) Date of publication of application: 30.04.2014
(73) Proprietor: Wärtsilä Finland Oy, 65380 Vaasa (FI)
(72) Inventor: LILJENFELDT, Gösta, FI-65450 Solf (FI); NYNÄS, Håkan, FI-65280 Vaasa (FI)
(74) Representative: Genip Oy
(86) International application number: PCT/FI2012/050588
(87) International publication number: WO 2012/175795

(56) References cited:
- EP-A2- 1 111 229
- DE-A1- 10 246 595
- DE-A1- 10 257 641
- DE-A1- 10 309 387
- FR-A1- 2 913 465
- GB-A- 1 114 283

## Description

### Technical field

The present invention relates to a fuel injection system for an internal combustion piston engine comprising a fuel source which is arranged in connection with a fuel admission port, which is either directly or indirectly delivering fuel into the combustion chamber of an the internal combustion piston engine in an intermittent manner

### Background art

A combustion engine, particularly an internal combustion piston engine comprises several fluid circuits having specific devices for controlling the flows in the circuits. For example a cooling system of an engine is typically controlled in order to maintain the temperature of the engine and its components within required limits. There are also other fluid flows in connection with which at least some kind of flow rate control is performed, such as fuel injection, charge air / exhaust gas flow, just to mention a few. Typically, controlling such fluid flows comprises adjusting the flow rate variably to at least some extent. Basically all fluid flows in an internal combustion piston engine have an impact on the performance of the engine, some of the fluid flows requiring very accurate control due to their strong influence on the performance.

The operational requirements of combustion engines are becoming more and more demanding and thus the accuracy and reliability of control systems is ever more important. This relates not only to the fuel system, the importance of which has been recognized a long ago, but to practically all fluid flow systems in a internal combustion piston engine, which have an influence on the overall performance of the engine.

The fuel injection system particularly of a large internal combustion piston engine being capable of producing power more than 150 kW/cylinder operated particularly with a fuel oil is typically arranged by making use of a common rail based fuel supply system in which fuel injection is separated from producing the pressurized fuel. Fuel is pressurized by means of a high pressure pump system and delivered to an accumulator from which the fuel is metered to each cylinder by separated fuel injectors. The injectors may be electronically or electro-hydraulically controlled. Typically the load control of the engine effects on the duration of injection of fuel through fuel injectors so that when more power is required, more fuel is injected increasing the duration of the injection time. This leads to the fact that in practise the dimensioning of the injector is a compromise in order to handle the whole load range of the engine. It is possible that the flow pattern may vary in undesired manner depending on the load.

DE 10246595 A1 there is shown a fuel injection system comprising two valve elements. Each of the valve elements is controlled by a dedicated control device. In DE 10257641 A1 there is shown a fuel injector having two parallel actuators controlling the operation of the fuel admission needle of the valve.

A multi fuel engine using e.g. natural gas as a primary fuel and fuel oil as secondary fuel is known as a dual fuel engine. Such an engine can be run on e.g. natural gas, light fuel oil (LFO) or heavy fuel oil (HFO) and it can be a two-stroke or four-stroke engine operating with e.g. otto- and/or diesel cycle. Moreover, the engine can switch over from gas to LFO/HFO and vice versa during engine operation. In gas-mode operation gas is brought into the cylinder of the engine via a gas admission valve provided in connection with the inlet gas channel of the cylinder head upstream the inlet valve. Liquid fuel oil is used as a pilot fuel for igniting the compressed gas-air mixture in the cylinder. Typically the load control of the engine is realized by the gas admission valve so that when more power is required, the duration of the open state of the valve is increased. This leads to the fact that in practice the dimensioning of the fuel admission valve is a compromise in order to handle the whole load range of the engine.

An object of the invention is to provide a fuel injection system for an internal combustion piston engine, in which the control performance is considerably improved compared to the prior art solutions.

Further it is a particular object of an embodiment of the invention to provide a gaseous fuel admission system for a internal combustion piston engine in which the control performance is considerably improved compared to the prior art solutions.

### Disclosure of the Invention

Objects of the invention are substantially met by a fuel injection system for an internal combustion piston engine comprising a fuel source in which fuel injection system a fuel admission port arranged to deliver fuel to be combusted in the internal combustion piston engine in intermittent manner, is arranged in connection with the fuel source, and which fuel injection system further comprises at least one fluid flow control device arranged to control the flow of fuel into the fuel admission port and which at least one fluid flow control device comprises at least two parallel valve units each having two operational positions. It is characteristic to the invention that the at least one fluid flow control device comprises more than two parallel valve units, and the valve units are arranged to be set into one of their two operational positions in at least two phases thus providing a rate shaping function of the injection.

According to an embodiment of the invention the fluid flow control device comprises more than two parallel valve units having different flow characteristics.

According to an embodiment of the invention at least one of the valve units is provided with a removably assembled restriction element effecting on the flow characteristics of the valve unit.

According to an embodiment of the invention all valve units are provided with a removable restriction element effecting on the flow characteristics of the valve unit.

According to an embodiment of the invention the fluid flow control device is arranged to immediate vicinity to the fuel admission port opening into the combustion chamber.

According to an embodiment of the invention the fluid flow control device is arranged to immediate vicinity to the fuel admission port opening into the inlet air channel.

According to an embodiment of the invention the fluid flow control device is arranged in a control pressure system effecting in the fuel injection,

In the method of operating a fuel injection system in an internal combustion engine according to an embodiment of the invention fuel is delivered from a fuel source to a fuel admission port and combusted in intermittent manner in the combustion engine, in which method the flow of fuel in the fuel admission port is controlled by valve units. It is characteristic to the invention that the delivery of the fuel to the fuel admission port is controlled by more than two valve units and by setting each of at least two parallel valve units of the fluid flow control device into one of their two operational positions in at least two phases thus providing a rate shaping function of the injection.

According to an embodiment of the invention each of the at least two parallel valve units is set simultaneously into anyone of their two operational positions.

According to an embodiment of the invention more than two parallel valve units are set into one of their two operational positions.

According to an embodiment of the invention the at least one fluid flow control device controls directly the admission of the fuel.

According to another embodiment of the invention the at least one fluid flow control device controls a pressure of a control fluid.

### Brief Description of Drawings

In the following, the invention will be described with reference to the accompanying exemplary, schematic drawings, in which
Figure 1 illustrates a fluid flow system for an internal combustion piston engine according to an embodiment of the invention,
Figure 2 illustrates a fluid flow system for an internal combustion piston engine according to another embodiment of the invention,
Figure 3 illustrates an embodiment of a valve unit for a fluid flow control device according to an embodiment the invention,
Figure 4 illustrates another embodiment of a valve unit for a fluid flow control device according to an embodiment the invention, and
Figure 5 illustrates a fluid flow system for an internal combustion piston engine according to a still another embodiment of the invention.

### Detailed Description of Drawings

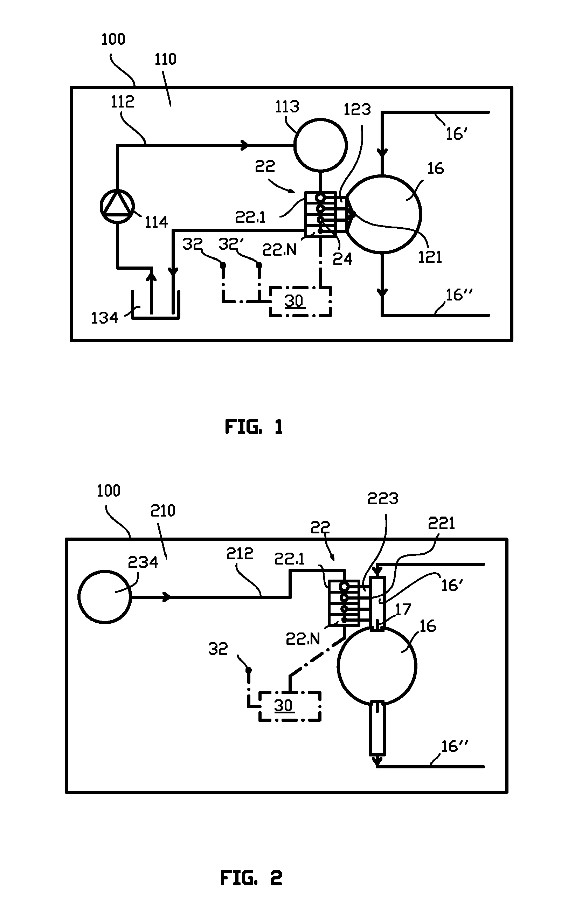

Figure 1 depicts schematically a fluid flow system 110 for an internal combustion piston engine 100 according to an embodiment of the invention. In this embodiment the fluid flow system is a liquid fuel direct injection system of an internal combustion piston engine 100. The flow system includes a main fluid channel, which in this embodiment is a main fuel line 112. The main fuel line 112 comprises a high pressure pump 114 for pressurizing the fuel and delivering the fuel into a fuel accumulator system 113 from fuel source 134, such as a tank. In figure 1 there is only one cylinder 16 of the number of cylinders belonging to the internal combustion piston engine shown, as well as an inlet air channel 16' and an exhaust gas channel 16". The fluid flow system 110 i.e. the liquid fuel direct injection system further comprises a fuel flow control device 22 in connection with a fuel injection unit 123. The fuel injection unit 123 is arranged in connection with the cylinder 16 of the engine forming a direct injection device. The fuel flow control device 22 is arranged to control the amount of fuel injected into the cylinder 16 through its fuel admission port 121. In this case the fuel is preferably a liquid fuel.

The fuel flow control device 22 comprises several parallel valve units 22.1, ... 22.N each of which having two operational positions between which the valve units may be switched. In this case the valve units are on/off valves. Each of the valve units has different flow characteristics. There are preferably at least four valve units provided.

The fuel flow control device 22 is also provided with a control system 30 comprising actuator devices, by means of which each of the valve units 22.1, ,... 22.N may be switched between the two operational positions . The control system is preferably provided with a first probe system 32 transmitting the information at least of the rotational position of the crankshaft either directly or indirectly and information relating to engine load. There is also advantageously a second probe system 32' arranged in the control system 30. The second probe system 32' is arranged to provide an indication of the load of the engine to the control system 30. Each fuel injection before and/or during the power stroke of the engine involves a step of controlling the amount of injected fuel and/or timing and/or rate shaping of the injection by means of selecting and controlling an operational position of each valve unit 22.1 ... 22.N. Thus for each injection it is determined which of the valve units are to be opened, and the timing of the opening, as well as closing of each of the valve unit.

This way the injection process may be controlled very efficiently. In addition to being able to control the open-state duration of each valve unit it is possible to control the amount of fuel injected by selecting suitable valve units to open for each injection. Additionally the timing of the opening of each valve unit may be controlled thus making it possible to arrange suitable rate shaping of each injection. In other words, at least when running the engine under load i.e. when the engine is not idling, each injection comprises opening of at least two valve units. According to a preferred embodiment the opening of the valve units is commenced one after the other. This has the effect of evening the possible pressure peak caused by ignition of the fuel in the combustion chamber particularly when the engine is operated as a compression ignition engine.

According to an embodiment of the fuel injection system according to the invention, under normal service of the engine, the control system 30 is arranged to select a first combination of valve units to be open with a first duration of injection at the first operational circumstances of the engine. However, the control system 30 is also arranged to select a second combination of valve units to be open with a second duration of injection at a second operational circumstances of the engine. This way the control of the injection is very precise.

With the present invention it is also possible to obtain an equal operation by making use of different selection of valve units, which improves the redundancy of the fuel injection system and the availability of engine considerably. This is of great advantage particularly in marine vessel power systems.

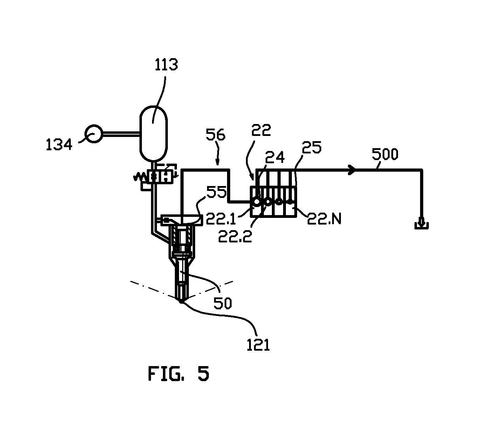

According to a still another embodiment of the invention the fluid flow system is the control fluid system of the direct fuel injection system of an internal combustion piston engine as depicted in figure 5. In this embodiment the fluid flow system is arranged in a control pressure system 56. It is used for releasing or activating a control pressure effecting in the fuel injection system, the state of which control pressure rules the operational state of the fuel injection system. By controlling the opening sequence of at least two parallel valve units the pressure release rate is controlled and a fuel injection rate shaping function is provided.

The fuel injection system is operated so that the source of pressurized fuel maintains the fuel accumulator volume 113 filled with fuel at a predetermined pressure. When the parallel valve units 22.1, 22.2, ... 22.N each of which has two operational positions, between which the valve units may be switched, are opened in sequence, the flow communication between an outlet channel 55 and the low pressure part 500 of the system the pressure in the chamber or space above the injector needle 50 changes rapidly, but still in a controllable way.

Now, returning to figure 1, according to a preferred embodiment of the invention each of the valve units is provided with a base part 25 and a restriction element 24. Preferably the restriction element 24 is arranged into the valve unit so that it may effect on i.e. throttle the fluid flow. The restriction element 24 advantageously is removably assembled to the base part 25. The restriction element is a member effecting on the flow characteristics of the valve unit in throttling manner. More specifically the restriction element 24 effects on the flow resistance of the valve unit, preferably by setting a locally constricted flow area. This is depicted in figure 1 as a circle. Further it is advantageous that the base parts 25 of valve units 22.1, 22.2, ... 22.N are substantially identical, and particularly with respect to joining elements by means of which the restriction element 24 joins to the valve unit. The number of valve units may vary but preferably there are at least four units. The restriction element includes means for adaptation of the flow characteristics of the valve unit when assembled to the valve unit, which means that the restriction elements are according to an embodiment of the invention different in different valve units. In this way the valve units are modularized allowing their flow characteristics to be changed by simply changing only the only restriction element 24 in the valve unit.

The fluid flow control device is also provided with a control system 30 arranged to control each of the valve units 22.1, 22.2,... 22.N into one of the two operational positions between which the valve unit may be switched. The control system is connected to a probe 32 in connection with the engine 100. The probe may comprise one or several individual probes 32, 32' in the engine.

The control system 30 is arranged to operate so that it reads or receives the measurement value of the probe 32 or the measurement value of the probe 32 is sent to the control system 30. Based on the measurement value or values of the probe the control system determines a need for a change in the control scheme practised. In case a change is needed the control device selects a new combination of operational positions of the valve units to open in the injection sequence.

The restriction elements 24 are preferably selected so that when the first valve unit has a relative flow rate of 1, the flow rate of the second valve is 1/2, the flow rate of third valve unit 1/4 etc. For a case, where the fluid flow control device comprises four on/off valve units, the relation between the combination of operational positions and effective flow rate is shown in the following table, which clearly shows the accuracy which can be achieved with 4 valve units:

| **Valve unit 1** | **Valve unit 2** | **Valve unit 3** | **Valve unit 4** | **Total relative flow rate** |
|---|---|---|---|---|
| 0 | 0 | 0 | 0 | 0,000 |
| 0 | 0 | 0 | 1 | 0,125 |
| 0 | 0 | 1 | 0 | 0,250 |
| 0 | 0 | 1 | 1 | 0,375 |
| 0 | 1 | 0 | 0 | 0,500 |
| 0 | 1 | 0 | 1 | 0,625 |
| 0 | 1 | 1 | 0 | 0,750 |
| 0 | 1 | 1 | 1 | 0,875 |
| 1 | 0 | 0 | 0 | 1.000 |
| 1 | 0 | 0 | 1 | 1,125 |
| 1 | 0 | 1 | 0 | 1,250 |
| 1 | 0 | 1 | 1 | 1,375 |
| 1 | 1 | 0 | 0 | 1,500 |
| 1 | 1 | 0 | 1 | 1,625 |
| 1 | 1 | 1 | 0 | 1,750 |
| 1 | 1 | 1 | 1 | 1,875 |

In this embodiment the valve unit 1 provides a relative flow rate 1, valve unit 2 provide a relative flow rate 0,5 an so on. It can be seen that 16 different flow rates can be obtained with four valve units. Correspondingly, 32 and 64 different flow rates may be obtained with 5 and 6 valve units respectively.

As each of the valve units may be independently switched between two operational positions it is possible to set practically any required fluid flow situations that may be needed by arranging and combining of the operational positions of individual valve units in a proper way. Depending on the type of the valve units the operational positions may be "on" or "off" or positions guiding the flow to either of two possible directions. In the case of Figure 1 the valve units have two selectable positions guiding the flow to either of two possible directions.

Figure 2 depicts schematically a fluid flow system 210 for a internal combustion piston engine 100 according to another embodiment of the invention. In this embodiment the fluid flow system is particularly a gaseous fuel feeding system of an internal combustion piston engine 100. The gaseous fuel injection system includes a main fluid channel which in this embodiment is a gaseous fuel feed line 212. The fuel feed line 212 is in flow connection to a gaseous fuel source 234 and to a fuel flow control device 22. For clarity reasons there is shown only one cylinder 16 of the number of cylinders in the internal combustion piston engine. Also an inlet air channel 16' and an exhaust gas channel 16" leading to and from the cylinder 16 are shown. The fuel flow control device 22 in fluid flow system 210 comprises further a fuel gas admission unit 223. The fuel admission unit 223 is arranged to open into the inlet air channel 16' upstream in vicinity to the inlet valve/valves 17 in each cylinder through admission port 221.

The fuel flow control device 22 and the gas admission unit 223 comprises several parallel valve units 22.1, ... 22.N. Each valve unit is connected to fuel feed line 12 and controllably opens in the inlet air channel 16'. Each of the valve units has two operational positions between which the valve units may be switched. In this case the valve units are on/off valves. Each of the valve units has different flow characteristics. Thus the amount of the gas admitted to the inlet air channel is controlled so that before and/or during the inlet valve is open during and/or before each inlet stroke a selected number of valve units is changed to their "on"- position. At that position the valve units open in the inlet air channel 16' and allow the admission of fuel gas into the channel. Each valve unit has only two operational positions, i.e. it is either totally closed or 100% open, but with a suitable selection of valve units which are opened/closed it is possible to control the amount of fuel gas admitted into the inlet gas for each combustion event in the work cycle.

The fuel flow control device 22 is also provided with a control system 30 arranged to control each of the valve units 22.1, ,... 22.N in the fuel admission unit into one of the two operational positions between which the valve unit may be switched. The control system is preferably provided with a probe system 32 transmitting the information of the rotational position of the crankshaft either directly or indirectly. Additionally the probe system may include a probe unit in connection with the inlet valve 17. In this way the injection process can be controlled very efficiently and the gas injection may be accurately timed in respect to the work cycle of the engine and the position of the inlet valve(s). In addition to being able to control the open-state duration of each valve unit it is possible to control the amount of gas injected by selecting suitable combination valve units to open for each injection in the working cycle of the engine. Preferably the number of parallel valve units arranged in connection with inlet air channel is at least four.

According to an embodiment of the invention the fuel injection system is provided with a safety operation system allowing the operation of the engine also in emergency situations. The fuel injection system may comprise a manual locking system by means of which the valve member in each valve unit may be locked to either of their operational positions, The manual locking system comprises locking means in connection with each valve unit. The locking means is also arranged to allow the manual change of the operational position. In the embodiment of figure 2 the inlet valve 17 which is actuated mechanically or independently from the control of the fuel injection system. The manual locking system may be arranged also in connection with other embodiments of the valve units according to the invention provided that actual fuel metering may be accomplished e.g. mechanically.

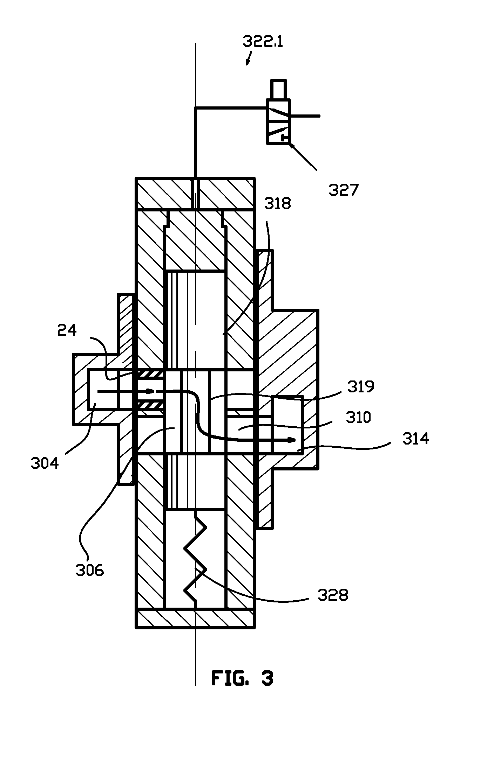

In figure 3 there is shown an embodiment of a valve unit 322.1 in which the fluid is passed from an inlet manifold 304 outside the valve member 318 along the recess 319 arranged in to the valve member and inside the body of the valve unit. The valve unit is applicable to the embodiment eg. shown in figure 1 and 2.The valve unit 322.1 may be parallel coupled correspondingly to those shown in figure 1. The valve space 306 is provided with an outlet 310 in its cylindrical portion connected to the outlet manifold 314. In this embodiment the actuator 327 is a single action actuator which is capable of subjecting force to the valve member 318 only in one direction. In order to move the valve member between the two operational positions there is a spring element 328 arranged in the opposite end to the actuator 327 of the valve member 318. The actuator 327 is of hydraulic/pneumatic type and it is capable of moving the valve member 318 in the direction against the spring element and after releasing the work pressure the spring element returns the valve member back to its initial position.

There is also a restriction element 24 arranged in the valve unit 322.1 of figure 3. The restriction element is arranged immediately upstream the valve member. The restriction element 24 is in this embodiment a sleeve having a flow through opening. This way the sleeve effects on the flow characteristics of the valve unit. The valve units may be modularized allowing their flow characteristics to be changed by simply changing only the sleeve in the valve unit.

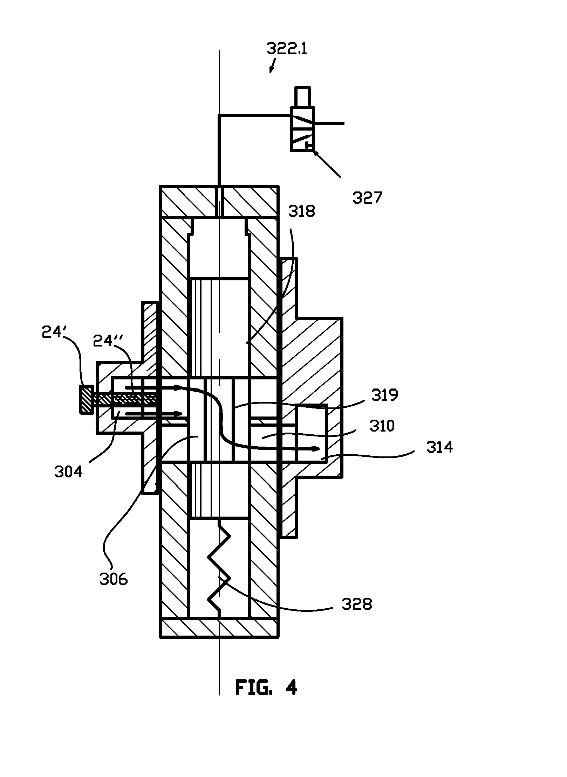

The restriction element may be realized in many ways. As is depicted in figure 4, instead of a flange or a sleeve the restriction element may be a replaceable pin 24' extending into the fluid flow channel of the valve unit. The valve unit in figure 4 corresponds to the valve unit in figure 3 except to the details relating to the restriction element. The effect of the restriction element may be changed by changing the pin having different dimensions as depicted by the dash-dot line 24".

While the invention has been described herein by way of examples in connection with what are, at present, considered to be the most preferred embodiments, it is to be understood that the invention is not limited to the disclosed embodiments.

## Claims

1. A fuel injection system for an internal combustion piston engine (100) comprising a fuel source (134,234), in which fuel injection system a fuel admission port (121,221) arranged to deliver the fuel to be combusted in the internal combustion piston engine in intermittent manner, is arranged in connection with the fuel source, and which fuel injection system further comprises at least one fluid flow control device arranged to control the flow of fuel into the fuel admission port (121,221), and which at least one fluid flow control device (22) comprises at least two parallel valve units (22.1 ... 22.N) each having two operational positions, **characterized in that** the at least one fluid flow control device (22) comprises more than two parallel valve units (22.1 ... 22.N), and the valve units are arranged to be set into one of their two operational positions in at least two phases thus providing a rate shaping function of the injection.

2. A fuel injection system according to claim 1, **characterized in that** the fluid flow control device (22) comprises more than two parallel valve units having different flow characteristics.

3. A fuel injection system according to claim 1, **characterized in that** at least one of the valve units (22.1 ... 22.N) is provided with a removably assembled restriction element (34) effecting on the flow characteristics of the valve unit.

4. A fuel injection system according to claim 3, **characterized in that** all valve units (22.1 ... 22.N) are provided with the restriction element (34).

5. A fuel injection system according to claim 1, **characterized in that** the fluid flow control device (22) is arranged to immediate vicinity to the fuel admission port (121) opening into the combustion chamber.

6. A fuel injection system according to claim 1, **characterized in that** the fluid flow control device (22) is arranged in the immediate vicinity to the fuel admission port (221) opening into the inlet air channel (16').

7. A fuel injection system according to claim 1, **characterized in that** the fluid flow control device (22) is arranged in a control pressure system (56) effecting in the fuel injection.

8. A method of operating a fuel injection system in an internal combustion engine in which fuel is delivered from a fuel source (134, 234) to a fuel admission port (111,221) and combusted in intermittent manner in the combustion engine and in which method the flow of fuel in the fuel admission port is controlled by at least one fluid flow control device comprising valve units, **characterised in that** the delivery of the fuel to the fuel admission port (121, 221) is controlled by the at least one fluid flow control device having more than two valve units and by setting each of the valve units (22.1 ... 22.N) of the fluid flow control device into one of their two operational positions in at least two phases thus providing a rate shaping function of the injection.

9. A method according to claim 8, **characterized in, that** each of the at least two parallel valve units (22.1 ... 22.N) is set simultaneously into anyone of their two operational positions.

10. A method according to claim 8, **characterized in, that** the at least one fluid flow control device (22) controls directly the admission of the fuel.

11. A method according to claim 8, **characterized in, that** the at least one fluid flow control device controls a pressure of a control fluid (56).

## Patentansprüche

1. Kraftstoff-Einspritzsystem für einen Kolbenverbrennungsmotor (100), eine Kraftstoffquelle (134, 234) umfassend, wobei in dem Kraftstoff-Einspritzsystem eine Kraftstoff-Eintrittsöffnung (121, 221), die dafür angeordnet ist, den im Kolbenverbrennungsmotor zu verbrennenden Kraftstoff intermittierend zuzuführen, in Verbindung mit der Kraftstoffquelle angeordnet ist, und wobei das Kraftstoff-Einspritzsystem ferner mindestens eine Fluidstrom-Steuervorrichtung umfasst, die dafür angeordnet ist, den Kraftstoffstrom in die Kraftstoff-Eintrittsöffnung (121, 221) zu steuern, und wobei die mindestens eine Fluidstrom-Steuervorrichtung (22) mindestens zwei parallele Ventileinheiten (22.1 ... 22.N) mit jeweils zwei Betriebspositionen, **dadurch gekennzeichnet, dass** die mindestens eine Fluidstrom-Steuervorrichtung (22) mehr als zwei parallele Ventileinheiten (22.1 ... 22.N) umfasst und die Ventileinheiten derart angeordnet sind, dass sie in mindestens zwei Phasen in eine ihrer zwei Betriebspositionen versetzt werden, was eine Verlaufsformungsfunktion der Einspritzung bereitstellt.

2. Kraftstoff-Einspritzsystem nach Anspruch 1, **dadurch gekennzeichnet, dass** die Fluidstrom-Steuervorrichtung (22) mehr als zwei parallele Ventileinheiten mit unterschiedlichen Strömungseigenschaften umfasst.

3. Kraftstoff-Einspritzsystem nach Anspruch 1, **dadurch gekennzeichnet, dass** mindestens eine der Ventileinheiten (22.1 ... 22.N) mit einem abseits angebauten Beschränkungselement (34) versehen ist, das die Strömungseigenschaften der Ventileinheit beeinflusst.

4. Kraftstoff-Einspritzsystem nach Anspruch 3, **dadurch gekennzeichnet, dass** alle Ventileinheiten (22.1 ... 22.N) mit dem Beschränkungselement (34) versehen sind.

5. Kraftstoff-Einspritzsystem nach Anspruch 1, **dadurch gekennzeichnet, dass** das die Fluidstrom-Steuervorrichtung (22) in unmittelbarer Nähe der Kraftstoff-Eintrittsöffnung (121) angeordnet ist, die sich in die Brennkammer öffnet.

6. Kraftstoff-Einspritzsystem nach Anspruch 1, **dadurch gekennzeichnet, dass** die Fluidstrom-Steuervorrichtung (22) in unmittelbarer Nähe der Kraftstoff-Eintrittsöffnung (221) angeordnet ist, die sich in den Lufteinlasskanal (16') öffnet.

7. Kraftstoff-Einspritzsystem nach Anspruch 1, **dadurch gekennzeichnet, dass** die Fluidstrom-Steuervorrichtung (22) in einem Steuerdrucksystem (56) angeordnet ist, das die Kraftstoffeinspritzung beeinflusst.

8. Verfahren zum Betreiben eines Kraftstoff-Einspritzsystems in einem Verbrennungsmotor, in dem Kraftstoff von einer Kraftstoffquelle (134, 234) einer Kraftstoff-Eintrittsöffnung (121, 221) zugeführt und intermittierend im Verbrennungsmotor verbrannt wird, und wobei in dem Verfahren der Kraftstoffstrom in der Kraftstoff-Eintrittsöffnung durch mindestens eine Fluidstrom-Steuervorrichtung gesteuert wird, die Ventileinheiten umfasst, **dadurch gekennzeichnet, dass** die Zufuhr des Kraftstoffs zur Kraftstoff-Eintrittsöffnung (121, 221) durch die mindestens eine Fluidstrom-Steuervorrichtung gesteuert wird, die mehr als zwei Ventileinheiten aufweist, und durch Versetzen jeder der Ventileinheiten (22.1 ... 22.N) der Fluidstrom-Steuervorrichtung in mindestens zwei Phasen in eine ihrer zwei Betriebspositionen, was eine Verlaufsformungsfunktion der Einspritzung bereitstellt.

9. Verfahren nach Anspruch 8, **dadurch gekennzeichnet, dass** jede der mindestens zwei parallelen Ventileinheiten (22.1 ... 22.N) gleichzeitig in eine ihrer zwei Betriebspositionen versetzt wird.

10. Verfahren nach Anspruch 8, **dadurch gekennzeichnet, dass** die mindestens eine Fluidstrom-Steuervorrichtung (22) den Eintritt des Kraftstoffes direkt steuert.

11. Verfahren nach Anspruch 8, **dadurch gekennzeichnet, dass** die mindestens eine Fluidstrom-Steuervorrichtung einen Druck eines Steuerfluids (56) steuert.

## Revendications

1. Système d'injection de carburant pour un moteur à piston à combustion interne (100) comprenant une source de carburant (134, 234), dans lequel système d'injection de carburant, un port d'admission de carburant (121, 221) agencé pour fournir le carburant destiné à la combustion dans le moteur à piston à combustion interne de façon intermittente, est agencé en liaison avec la source de carburant, et lequel système d'injection de carburant comprend en outre au moins un dispositif de commande de débit fluidique agencé pour commander le débit fluidique dans le port d'admission de carburant (121, 221) et lequel au moins un dispositif de commande de débit fluidique (22) comprend au moins deux unités de soupapes parallèles (22.1 ... 22.N) ayant chacune deux positions opérationnelles, **caractérisé en ce que** l'au moins un dispositif de commande de débit fluidique (22) comprend plus de deux unités de soupapes parallèles (22.1 ... 22.N) et les unités de soupapes sont agencées pour être mises dans l'une de leurs deux positions opérationnelles en au moins deux phases, fournissant ainsi une fonction de modelage de la vitesse de l'injection.

2. Système d'injection de carburant selon la revendication 1, **caractérisé en ce que** le dispositif de commande de débit fluidique (22) comprend plus de deux unités de soupapes parallèles ayant différentes caractéristiques de débit.

3. Système d'injection de carburant selon la revendication 1, **caractérisé en ce qu'**au moins une des unités de soupapes (22.1 ... 22.N) est dotée d'un élément d'étranglement monté de façon amovible (34) agissant sur les caractéristiques de débit de l'unité de soupape.

4. Système d'injection de carburant selon la revendication 3, **caractérisé en ce que** toutes les unités de soupapes (22.1 ... 22.N) sont dotées de l'élément d'étranglement (34).

5. Système d'injection de carburant selon la revendication 1, **caractérisé en ce que** le dispositif de commande de débit fluidique (22) est agencé à proximité immédiate du port d'admission de carburant (121) ouvrant dans la chambre de combustion.

6. Système d'injection de carburant selon la revendication 1, **caractérisé en ce que** le dispositif de commande de débit fluidique (22) est agencé à proximité immédiate du port d'admission de carburant (221) ouvrant dans le canal d'air d'admission (16').

7. Système d'injection de carburant selon la revendication 1, **caractérisé en ce que** le dispositif de commande de débit fluidique (22) est agencé dans un système de pression de commande (56) agissant dans l'injection de carburant.

8. Procédé destiné au fonctionnement d'un système d'injection de carburant d'un moteur à combustion interne dans lequel du carburant est fourni d'une source de carburant (134, 234) vers un port d'admission de carburant (121, 221) et mis en combustion de façon intermittente dans le moteur à combustion et dans lequel procédé, le débit de carburant dans le port d'admission de carburant est commandé par au moins un dispositif de commande de débit fluidique comprenant des unités de soupapes, **caractérisé en ce que** la fourniture du carburant au port d'admission de carburant (121, 221) est commandée par l'au moins un dispositif de commande de débit fluidique présentant plus de deux unités de soupapes et en réglant chacune des unités de soupapes (22.1 ... 22.N) du dispositif de commande de débit fluidique dans l'une de leurs deux positions opérationnelles en au moins deux phases, fournissant ainsi une fonction de modelage de la vitesse de l'injection.

9. Procédé selon la revendication 8, **caractérisé en ce que** chacune des au moins deux unités de soupapes parallèles (22.1 ... 22.N) est réglée simultanément en l'une quelconque de leurs deux positions opérationnelles.

10. Procédé selon la revendication 8, **caractérisé en ce que** l'au moins un dispositif de commande de débit fluidique (22) commande directement l'admission du carburant.

11. Procédé selon la revendication 8, **caractérisé en ce que** l'au moins un dispositif de commande de débit fluidique commande une pression d'un fluide de commande (56).
